# EUROPEAN PATENT SPECIFICATION

(11) **EP 0 536 237 B1**
(45) Date of publication and mention of the grant of the patent: **14.12.1994**
(21) Application number: 91912193.9
(22) Date of filing: 24.06.1991
(51) Int. Cl.: F01L 1/34, F16D 3/10, F16D 41/08

(54) **PHASE CHANGE MECHANISM**
DREHWINKELVERSTELLVORRICHTUNG
MECANISME DE CHANGEMENT DE PHASE

(30) Priority: 26.06.1990 GB 9014209
(43) Date of publication of application: 14.04.1993
(73) Proprietor: FORD MOTOR COMPANY OF CANADA, LIMITED, Oakville Ontario L6J 5E4 (CA); FORD-WERKE AKTIENGESELLSCHAFT, 50725 Köln (DE); FORD MOTOR COMPANY, Dearborn, MI 48120 (US); FORD FRANCE S. A., 92506 Rueil-Malmaison Cédex (FR); FORD MOTOR COMPANY LIMITED, Brentwood, Essex CM13 3BW (GB)
(72) Inventor: MA, Thomas, Tsoi-Hei 1 Collingwood Road, Chelmsford CM3 5YB (GB)
(74) Representative: Messulam, Alec Moses
(86) International application number: GB9101017
(87) International publication number: WO9200441

(56) References cited:
- EP-A- 0 365 338
- EP-A- 0 438 720
- WO-A-90/14530
- US-A- 4 708 101

## Description

### Field of the invention

The present invention relates to a phase change mechanism for incorporation in a wheel driving a camshaft of an internal combustion engine to enable the phase of the camshaft to be varied in relation to the phase of the crankshaft. The wheel may be a toothed pulley for a belt passing around a crankshaft pulley or a sprocket for a chain driven by the crankshaft.

### Description of Prior Art

is already known from EP-A-0 365 338 to provide a phase change mechanism that comprises a camshaft, a drive wheel journalled on the camshaft to rotate therewith about the same axis and means for rotating the drive wheel relative to the camshaft. A problem that needs to be addressed in such a mechanism is how to control the phase change while the engine is running.

Some solutions have resorted to use of an axially displaceable actuator, the movement of which is converted by a screw or helix into rotation of the camshaft relative to its drive wheel. Such an approach is difficult to package because of the space requirements of the actuator. It also requires energy to power the actuator and some means of supplying the energy to the actuator while it is rotating.

In EP-A-0 365 338, very high ratio differential gearing connects the camshaft to the drive wheel and a rotary actuator operated by stationary brake bands drives an eccentric that acts on the differential gearing, or on a lever linkage to bring about a phase change.

In EP-A-0 438 720 which claims an earlier priority date than the present application but was not published until after the priority date of the application, there is described a phase change mechanism that comprises two one-way clutches acting between the camshaft and the drive wheel. The clutches include a single set of rollers acting between two sets of ramp surfaces and a race on the drive wheel and cage with springs for urging the rollers against the ramp surfaces. The cage is mounted for rotation with the camshaft and a control mechanism including a piston and cylinder is used to effect phase changes.

### Object of the invention

The present invention seeks to provide a phase change mechanism which can be controlled simply.

### Summary of the invention

According to a first aspect of the invention, there is provided a phase change mechanism comprising a camshaft, a drive wheel journalled on the camshaft to rotate therewith about the same axis and means for rotating the drive wheel relative to the camshaft, characterised in that the means for rotating the drive wheel relative to the camshaft comprise two one-way clutches acting in opposite directions of rotation between the drive wheel and the camshaft, each clutch including a respective set of rollers acting between ramp surfaces fast in rotation with the camshaft and a race on the drive wheel, the two sets of rollers being urged into locking engagement between the ramps and the race by means of springs acting between the rollers and a movable cage common to the two one-way clutches, a linkage connecting the cage for rotation with the drive wheel, the linkage comprising a pair of levers pivoted to one another at one end, the other ends of the levers being pivotably connected to the cage and to the drive wheel, respectively, and control means for acting on the linkage to move the cage relative to the drive wheel, torque reversals acting on the camshaft during engine rotation serving in conjunction with the one-way clutches to cause the camshaft to follow the movement of the cage relative to the drive wheel.

The pivot between the two levers may be connected to a centrifugal weight and a spring so that the phase of the camshaft is varied automatically as a predetermined function of engine speed without any external control.

In accordance with a second aspect of the invention, there is provided a phase change mechanism comprising a camshaft, a drive wheel journalled on the camshaft to rotate therewith about the same axis and means for rotating the drive wheel relative to the camshaft, characterised in that the means for rotating the drive wheel relative to the camshaft comprise two one-way clutches acting in opposite directions of rotation between the drive wheel and the camshaft, each clutch including a respective set of rollers acting between ramp surfaces fast in rotation with the camshaft and a race on the drive wheel, the two sets of rollers being urged into locking engagement between the ramps and the race by means of springs acting between the rollers and a movable cage common to the two one-way clutches, a Bowden cable connecting the cage with the drive wheel for rotation therewith, the cable being operable to move the cage relative to the drive wheel and torque reversals acting on the camshaft during engine rotation serving in conjunction with the one-way clutches to cause the camshaft to follow the movement of the cage relative to the drive wheel.

In this case, pulling of the cable through a suitable axial thrust bearing can alter the phase of the camshaft relative to the drive wheel. This makes for particularly simple control since, instead of being connected to an electronic positioning device, the cable may be directly linked to the accelerator pedal so that the phase is automatically varied as a function of throttle position (and hence engine load) and the force required to alter the phase of the camshaft is exerted by the driver's foot and does not require any form of actuator.

It is possible to use a centrifugal weight or a cable to alter the phase relationship between the drive wheel and the camshaft because little force is needed to move the cage and the latter can be positioned at will during reversals of the torque on the camshaft. Of course, more force is needed to move the camshaft but this is not reflected in the force needed to move the cage and is instead derived from the torque reversals. The camshaft is never forced to move against the reaction of the valves but is merely allowed to move under the force of the valve springs when that force acts in the desired sense, the forces in the opposite sense being resisted by jamming of the appropriate one-way clutch.

### Brief description of the drawings

The invention will now be described further, by way of example, with reference to the accompanying drawings, in which:
Figure 1 is a section through a phase change mechanism of the invention taken along the broken section line I-I in Figure 2,
Figure 2 is an axial section through the same phase change mechanism, taken along the line II-II in Figure 1, and
Figure 3 is a view similar to that of Figure 1 through an alternative embodiment of the invention, using a Bowden cable to effect external control of the phase.

### Description of the preferred embodiments

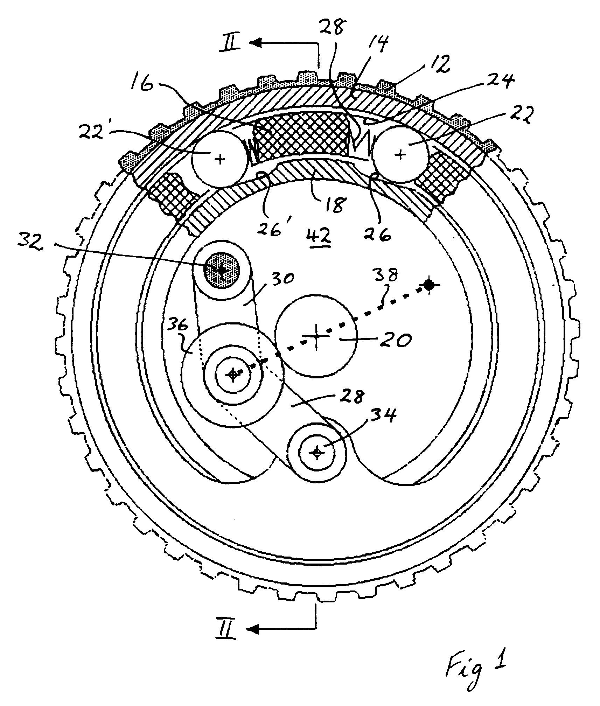

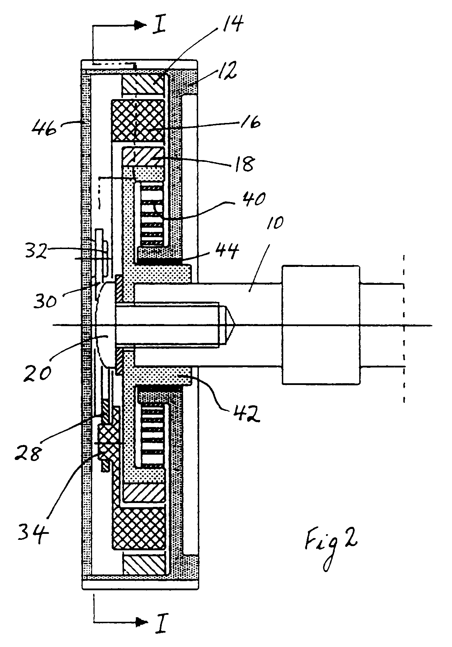

In Figures 1 and 2, a camshaft 10 is driven by a toothed belt acting on a toothed drive pulley 12 which is hollow and closed by a cover plate 46. Within the pulley 12 there are housed all the components of the phase change mechanism and these are permanently lubricated by grease contained within the sealed compartment defined within the drive pulley 12.

The camshaft 10 is connected by friction to a driven hub 42 which is retained on the camshaft by means of a screw 20. The drive pulley 12 is journalled about the hub 42 by means of a bearing 44. This mounting of the drive pulley 12 on the driven hub 42 ensures that the two remain concentric during operation.

The drive connection between the drive pulley 12 and the driven hub 42 is effected through a pair of one-way clutches. An outer race 14 having a cylindrical inner surface 24 is secured to the drive pulley 12. An inner race member 18 having oppositely facing ramps 26, 26' is secured about the driven hub 42. Rollers 22, 22' are retained in position between the ramps 26, 26' and the outer race surface 24 by means of a cage 16 and are urged towards the ramps 26, 26' by springs 28 acting between the rollers 26, 26' and the cage 16. Only one pair of rollers is shown sectioned in the drawing but other similar rollers are distributed around the circumference of the hub.

It has been assumed above that the rollers 26 and 26' lie in the same transverse plane but this need not be the case. It is possible to provide two independent one-way clutches arranged back to back and to connect their cages to one another.

Under stable conditions, both sets of rollers 26 and 26' are urged into contact with their respective ramps and lock the drive pulley to the driven hub in both directions of movement. In practice, there will be torque reactions in both directions from the camshaft because of the action of the valve springs and these will be resisted by the two one-way clutches.

If the cage 16 is rotated relative to the drive pulley in either direction one set of springs 28 will be further compressed while the others are relaxed. Subsequently, the cage 16 moves one set of rollers off their ramps so that one of the one-way clutches ceases to be effective. In Figure 1, the cage 16 and the rollers 22, 22' are shown in such a position after the cage has been rotate in an anticlockwise direction from a stable position.

In Figure 1, the clutch rollers 22 intended to prevent anticlockwise movement of the hub 42 relative to the pulley 12 are ineffective. Thus when the reaction torque on the camshaft tends to move the hub in that sense, there will be no opposition to the motion and the hub will move until it has followed the movement of the cage 16, whereupon all the clutches will again lock up. In other words, the hub 42 will always follow the movements of the cage 16 using the torque reversals on the camshaft to do so. At the point of torque reversal, the cage 16 can be moved easily, requiring only enough force to dislodge the rollers from locking contact. Thus an actuator producing little force is all that is needed to position the cage and the driven hub will follow of its own accord.

For phase change to occur at the same rate in both directions, it is necessary for the mean reaction torque to be zero. In practice, this is not so as there will be a net drag on the camshaft due to friction and to compensate for this, a spiral spring 40 applies a preload between the drive pulley 12 and the driven hub 42.

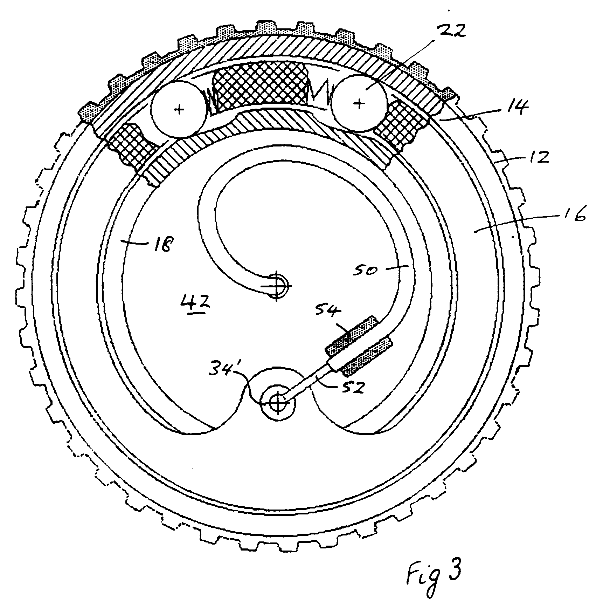

Two different methods of rotating the cage 16 relative to the drive pulley 12 are illustrated in the drawings. In the case of Figures 1 and 2 a centrifugal weight 36 counteracted by a spring 38 is used to achieve automatic variation of the phase with engine speed and in Figure 3 the movement is effected by a Bowden cable operated by the accelerator pedal to alter the phase with engine load.

In Figures 1 and 2, a pin 34 is formed on an extension of the cage 16 on which a lever 28 is pivotably mounted. A second pin 32 is formed on the cover 46 which is fast in rotation with the drive pulley 12 and on it is pivoted a second lever 30. The other ends of the two levers 28 and 30 are pivotably connected to one another and to the centrifugal weight 36. The weight is pulled into a central position by a spring 38 drawn schematically and as the rotational speed increases, the weight 36 flies out thereby drawing the two pivot pins 32 and 34 closer together to rotate the cage 16 clockwise as viewed in Figure 1.

In Figure 3, the pin 34' on the cage is connected to the inner cable 52 of a Bowden cable 50 of which the outer sheath is anchored by means of a cable grip 54 to the cover 46 fast in rotation with the drive pulley 12. The cable 50 passes along the axis of the camshaft and at its other end is connected to an axial thrust bearing (no shown). It is possible for the cable to push and pull the cage and if the cable core needs to be kept permanently in tension then a spring may be used for this purpose.

The thrust bearing can be moved axially by means of any suitable control device in dependence upon engine load and speed but more simply it can be linked to the accelerator pedal to alter the phase with throttle position. In this case, the force for effecting the phase change is exerted by the driver and no actuator of any sort is required. A cam may be interposed between the cable and the throttle pedal to achieve any desired rate of variation of phase with throttle position.

## Claims

1. A phase change mechanism comprising a camshaft (10), a drive wheel (12) journalled on the camshaft (10) to rotate therewith about the same axis and means for rotating the drive wheel (12) relative to the camshaft (10), characterised in that the means for rotating the drive wheel relative to the camshaft comprise two one-way clutches (22,26,22',26') acting in opposite directions of rotation between the drive wheel (12) and the camshaft (10), each clutch including a respective set of rollers (22,22') acting between ramp surfaces (26, 26') fast in rotation with the camshaft and a race (24) on the drive wheel (12), the two sets of rollers (22) being urged into locking engagement between the ramps (26) and the race (24) by means of springs (28) acting between the rollers (22) and a movable cage (16) common to the two one-way clutches, a linkage (28,30) connecting the cage (16) for rotation with the drive wheel (12), the linkage comprising a pair of levers (28,30) pivoted to one another at one end, the other ends of the levers being pivotably connected to the cage (16) and to the drive wheel (12), respectively, and control means (36,38) for acting on the linkage (28,30) to move the cage (16) relative to the drive wheel (12), torque reversals acting on the camshaft (10) during engine rotation serving in conjunction with the one-way clutches to cause the camshaft (10) to follow the movement of the cage (16) relative to the drive wheel (12).

2. A phase change mechanism as claimed in claim 1, wherein the levers (28,30) are connected to a centrifugal weight (36) and a spring (38) so that the phase of the camshaft (10) is varied automatically as a predetermined function of engine speed.

3. A phase change mechanism comprising a camshaft (10), a drive wheel (12) journalled on the camshaft (10) to rotate therewith about the same axis and means for rotating the drive wheel (12) relative to the camshaft (10), characterised in that the means for rotating the drive wheel relative to the camshaft comprise two one-way clutches (22,26,22',26') acting in opposite directions of rotation between the drive wheel (12) and the camshaft (10), each clutch including a respective set of rollers (22,22') acting between ramp surfaces (26, 26') fast in rotation with the camshaft and a race (24) on the drive wheel (12), the two sets of rollers (22) being urged into locking engagement between the ramps (26) and the race (24) by means of springs (28) acting between the rollers (22) and a movable cage (16) common to the two one-way clutches, a Bowden cable (50) connecting the cage (16) with the drive wheel (12) for rotation therewith, the cable (50) being operable to move the cage (16) relative to the drive wheel (12) and torque reversals acting on the camshaft (10) during engine rotation serving in conjunction with the one-way clutches to cause the camshaft (10) to follow the movement of the cage (16) relative to the drive wheel (12).

4. A phase change mechanism as claimed in claim 3,wherein the cable (50) extends along the axis of the camshaft (10) and a thrust bearing is fitted to the end of the cable remote from the end connected to the cage (16).

5. A phase change mechanism as claimed in claim 4, wherein the thrust bearing is coupled for movement with the accelerator pedal.

6. A phase change mechanism as claimed in claim 4, wherein the thrust bearing is movable in dependence upon engine load and speed by means of a control device.

7. A phase change as claimed in any preceding claim, wherein a spring (40) is provided for applying a preload torque to the camshaft (10) relative to the drive wheel (12) to counteract friction drag on the camshaft and permit phase changes to occur at the same rate in both directions.

## Patentansprüche

1. Phasenverschiebemechanismus mit einer Nockenwelle (10), einem auf der Nockenwelle (10) derart gelagerten Antriebsrad (12), daß es sich mit dieser um dieselbe Achse drehen kann, und Mitteln zum Verdrehen des Antriebsrades (12) gegenüber der Nockenwelle (10), dadurch gekennzeichnet, daß die Mittel zum Verdrehen des Antriebsrades gegenüber der Nockenwelle zwei Einwegkupplungen (22, 26; 22', 26') aufweisen, die zwischen dem Antriebsrad (12) und der Nockenwelle (10) in entgegengesetzten Drehrichtungen wirken, wobei jede Kupplung jeweils einen Satz Rollen (22, 22') enthält, die zwischen mit der Nockenwelle drehfest verbundenen Rampenflächen (26, 26') und einer Bahn (24) an dem Antriebsrad (12) wirksam sind, wobei die beiden Rollensätze (22) mittels zwischen den Rollen (22) und einem beweglichen, beiden Einwegkupplungen gemeinsamen Käfig (16) wirkenden Federn (28) in Sperreingriff mit den Rampen (26) zwischen diese gedrückt werden, einer den Käfig (16) zur Drehung mit dem Antriebsrad (12) verbindenden Koppeleinrichtung (28, 30), wobei die Koppeleinrichtung ein Paar Hebel (28, 30) aufweist, die an einem Ende miteinander schwenkbar verbunden sind, wobei die anderen Enden der Hebel schwenkbar jeweils mit dem Käfig (16) und dem Antriebsrad (12) verbunden sind, und mit Steuermitteln (36, 38) zum Einwirken auf die Koppeleinrichtung (28, 30) derart, daß der Käfig (16) relativ zu dem Antriebsrad (12) verdreht wird, wobei die beim Motorbetrieb auf die Nockenwelle wirkenden Drehmomentumkehrungen in Verbindung mit den Einwegkupplungen dazu genutzt werden, daß die Nockenwelle (10) der Bewegung des Käfigs (16) relativ zum Antriebsrad (12) folgt.

2. Phasenverschiebemechanismus nach Anspruch 1, worin die Hebel (28, 30) mit einem Fliehgewicht (36) und einer Feder (38) verbunden sind, so daß die Phase der Nockenwelle (10) automatisch in einer vorbestimmten Relation zur Motordrehzahl verstellt wird.

3. Phasenverschiebemechanismus mit einer Nockenwelle (10), einem auf der Nockenwelle (10) derart gelagerten Antriebsrad (12), daß es sich mit dieser um dieselbe Achse drehen kann, und Mitteln zum Verdrehen des Antriebsrades (12) gegenüber der Nockenwelle (10),
dadurch gekennzeichnet, daß die Mittel zum Verdrehen des Antriebsrades gegenüber der Nockenwelle zwei Einwegkupplungen (22, 26; 22', 26') aufweisen, die zwischen dem Antriebsrad (12) und der Nockenwelle (10) in entgegengesetzten Drehrichtungen wirken, wobei jede Kupplung jeweils einen Satz Rollen (22, 22') enthält, die zwischen mit der Nockenwelle drehfest verbundenen Rampenflächen (26, 26') und einer Bahn (24) an dem Antriebsrad (12) wirksam sind, wobei die beiden Rollensätze (22) mittels zwischen den Rollen (22) und einem beweglichen, beiden Einwegkupplungen gemeinsamen Käfig (16) wirkenden Federn (28) in Sperreingriff mit den Rampen (26) zwischen diese gedrückt werden, einem den Käfig (16) mit dem Antriebsrad (12) zur Drehung mit demselben verbindenden Bowdenzug (50), wobei der Bowdenzug (50) derart betätigbar ist, daß der Käfig (16) relativ zum Antriebsrad (12) verdreht wird, und wobei die beim Betrieb des Motors auf die Nockenwelle (10) wirkenden Drehmomentumkehrungen in Verbindung mit den Einwegkupplungen derart genutzt werden, daß die Nockenwelle (10) der Bewegung des Käfigs (16) relativ zum Antriebsrad (12) folgt.

4. Phasenverschiebemechanismus nach Anspruch 3, worin sich der Bowdenzug (50) längs der Achse der Nockenwelle (10) erstreckt und ein Drucklager an dem Ende des Bowdenzuges angebracht ist, das von dem mit dem Käfig (16) verbundenen Ende entfernt ist.

5. Phasenverschiebemechanismus nach Anspruch 4, worin das Drucklager zur Bewegung zusammen mit dem Gaspedal mit diesem verbunden ist.

6. Phasenverschiebemechanismus nach Anspruch 4, worin das Drucklager in Abhängigkeit von der Motorlast und Geschwindigkeit mittels einer Steuervorrichtung bewegbar ist.

7. Phasenverschiebemechanismus nach einem beliebigen der vorangehenden Ansprüche, worin eine Feder (40) zum Aufbringen eines Vorspannmomentes der Nockenwelle (10) gegenüber dem Antriebsrad (12) vorgesehen ist, um dem Reibungsschleppmoment an der Nockenwelle entgegenzuwirken und so eine Phasenverschiebung in beiden Richtungen mit der gleichen Geschwindigkeit zu ermöglichen.

## Revendications

1. Mécanisme de changement de phase comprenant un arbre à cames (10), une roue d'entraînement (12) mise en tourillon sur l'arbre à cames (10) afin de tourner avec celui-ci autour du même axe et un moyen pour faire tourner la roue d'entraînement (12) par rapport à l'arbre à cames (10), caractérisé en ce que le moyen pour faire tourner la roue d'entraînement par rapport à l'arbre à cames comprend deux embrayages unidirectionnels (22, 26, 22', 26') agissant dans des sens opposés de rotation entre la roue d'entraînement (12) et l'arbre à cames (10), chaque embrayage comportant un ensemble respectif de rouleaux (22, 22') agissant entre des surfaces en rampe (26, 26') en rotation solidaire avec l'arbre à cames et une piste (24) sur la roue d'entraînement (12), les deux ensembles de rouleaux (22) étant poussés en contact de mise en prise entre les rampes (26) et la piste (24) au moyen de ressorts (28) agissant entre les rouleaux (22) et une cage mobile (16) commune aux deux embrayages unidirectionnels, une transmission (28, 30) raccordant la cage pour rotation avec la roue d'entraînement (12), la transmission comprenant une paire de leviers (28, 30) qui sont reliés par pivot l'un à l'autre à une extrémité, les autres extrémités des leviers étant raccordées par pivots à la cage (16) et à la roue d'entraînement (12), respectivement et un moyen de commande (36, 38) pour agir sur la transmission (28, 30) afin de déplacer la cage (16) par rapport à la roue d'entraînement (12), des inversions de couple agissant sur l'arbre à cames (10) pendant la rotation du moteur servant en liaison avec les embrayages unidirectionnels à amener l'arbre à cames (10) à suivre le déplacement de la cage (16) par rapport à la roue d'entraînement (12).

2. Mécanisme de changement de phase selon la revendication 1, dans lequel les leviers (28, 30) sont raccordés à une masse centrifuge (36) et un ressort (38) de sorte que la phase de l'arbre à cames (10) varie automatiquement comme une fonction prédéterminée de la vitesse du moteur.

3. Mécanisme de changement de phase comprenant un arbre à cames (10), une roue d'entraînement (12) mise en tourillon sur l'arbre à cames (10) afin de tourner avec celui-ci autour du même axe et un moyen pour faire tourner la roue d'entraînement (12) par rapport à l'arbre à cames (10), caractérisé en ce que le moyen pour faire tourner la roue d'entraînement par rapport à l'arbre à cames comprend deux embrayages unidirectionnels (22, 26, 22', 26') agissant dans des sens opposés de rotation entre la roue d'entraînement (12) et l'arbre à cames (10), chaque embrayage comportant un ensemble respectif de rouleaux (22, 22') agissant entre des surfaces en rampe (26, 26') en rotation solidaire avec l'arbre à cames et une piste (24) sur la roue d'entraînement (12), les deux ensembles de rouleaux (22) étant poussés en contact de mise en prise entre les rampes (26) et la piste (24) au moyen de ressorts (28) agissant entre les rouleaux (22) et une cage mobile (16) commune aux deux embrayages unidirectionnels, un câble Bowden (50) raccordant la cage (16) à la roue d'entraînement (12) pour rotation avec celle-ci, le câble (50) pouvant être mis en oeuvre pour déplacer la cage (16) par rapport à la roue d'entraînement (12) et les inversions de couple agissant sur l'arbre à cames (10) pendant la rotation du moteur servant en liaison avec les embrayages unidirectionnels à amener l'arbre à cames (10) à suivre le déplacement de la cage (16) par rapport à la roue d'entraînement (12).

4. Mécanisme de changement de phase selon la revendication 3, dans lequel le câble (50) s'étend suivant l'axe de l'arbre à cames (10) et un palier de butée est adapté à l'extrémité du câble distant de l'extrémité raccordée à la cage (16).

5. Mécanisme de changement de phase selon la revendication 4, dans lequel le palier de butée est accouplé pour déplacement avec la pédale de l'accélérateur.

6. Mécanisme de changement de phase selon la revendication 4, dans lequel le palier de butée est déplaçable en fonction de la charge et de la vitesse du moteur au moyen d'un dispositif de commande.

7. Mécanisme de changement de phase selon l'une quelconque des revendications précédentes, dans lequel un ressort (40) est prévu pour appliquer un couple de précharge à l'arbre à cames (10) par rapport à la roue d'entraînement (12) pour agir contre la traînée de frottement sur l'arbre à cames et permettre que les changements de phase puissent se produire à la même vitesse dans les deux directions.
